Europäisches Patentamt

European Patent Office

Office européen des brevets

(19)

(11) **EP 0 590 332 B1**

(12) **EUROPÄISCHE PATENTSCHRIFT**

(45) Veröffentlichungstag und Bekanntmachung des Hinweises auf die Patenterteilung:
**24.11.1999 Patentblatt 1999/47**

(51) Int Cl.⁶: **G06F 17/28**

(21) Anmeldenummer: **93113986.9**

(22) Anmeldetag: **01.09.1993**

(54) **Verfahren zur Realisierung eines internationalen Sprachenverbundes in einem internationalen Kommunikationsnetz**

Method for realising an international language bond in an international communication network

Méthode de réalisation d'une liaison entre des langues internationales dans un réseau de communication international

(84) Benannte Vertragsstaaten:
**AT BE CH DE DK ES FR GB IT LI NL SE**

(30) Priorität: **28.09.1992 DE 4232482**

(43) Veröffentlichungstag der Anmeldung:
**06.04.1994 Patentblatt 1994/14**

(73) Patentinhaber: **SIEMENS AKTIENGESELLSCHAFT**
**80333 München (DE)**

(72) Erfinder: **Kammerl, Anton, Dr.-Ing.**
**D-82194 Gröbenzell (DE)**

(56) Entgegenhaltungen:
**EP-A- 0 311 416      GB-A- 2 096 374**

- MT MACHINE TRANSLATION SUMMIT. MANUSCRIPTS AND PROGRAM. 17. September 1987 , HAKONE, KANGAWA-KEN, JP Seiten 135 - 140 T. WITKAM 'Interlingual Machine Translation - An Industrial Initiative'
- COLING BUDAPEST. PROCEEDINGS OF THE 12TH INTERNATIONAL CONFERENCE ON COMPUTATIONAL LINGUISTICS Bd. 2 , 22. August 1988 , BUDAPEST, HUNGARY Seiten 756 - 759 T. WITKAM 'DLT - An industrial R&D project for multilingual MT'
- TERMINOLOGY AND KNOWLEDGE ENGINEERING. PROCEEDINGS OF THE INTERNATIONAL CONGRESS 29. September 1987 , TRIER, DE Seiten 369 - 376 V. SADLER 'AI - directed interlingual terminography in tomorrow's MT systems'
- INFORMATIE Bd. 32, Nr. 2 , 1990 , NL Seiten 183 - 191 J.M. VAN ZUIJLEN 'Het automatisch vertaalsystem DLT'
- IEICE TRANSACTIONS ON COMMUNICATIONS Bd. E75-B, Nr. 1 , Januar 1992 , TOKYO, JP Seiten 14 - 19 A. KUREMATSU 'Future Perspective of Automatic Telephone Interpretation'
- PATENT ABSTRACTS OF JAPAN vol. 12, no. 422 (P-783)9. November 1988 & JP-A-63 156 284 (FUJITSU) 29. Juni 1988

## Beschreibung

Die Erfindung betrifft ein Verfahren gemäß dem Oberbegriff des Patentanspruchs 1.

Für ein zukünfiges Internationales Kommunikationsnetz ist es wünschenswert, daß insbesondere Textnachrichten, die in das fremdsprachige Ausland gesendet werden, automatisch durch Sprachübersetzungssysteme in die Landessprache des jeweiligen Ziellandes übersetzt werden. Heute wird der internationale Nachrichtenverkehr zwar noch vorwiegend in englischer Sprache abgefaßt, weswegen die Verwendung automatischer Sprachübersetzungssysteme sich mehr oder weniger erübrigt. Es ist jedoch nicht auszuschließen, daß insbesondere bei der geschäftlichen Textkommunikation die Landessprachen zunehmend an Bedeutung gewinnen, und somit in zukünftigen Internationalen Kommunikationsnetzen ein Leistungsmerkmal 'automatische Sprachübersetzung (machine translation)' angeboten wird.

Die Verwendung von automatischen Sprachübersetzungssystemen zur Übersetzung Informationen beispielsweise in Form eines schriftlich abgefaßten Textes ist dabei bekannt.

Sie werden bereits seit den 50er Jahren in mehrerer Ländern im Rahmen von Projekten entwickelt, die sich mit künstlicher Intelligenz (artificial intelligence) und automatischer Sprachverarbeitung (natural language prossesing) befassen. Nach anfänglichen Schwierigkeiten stehen heute eine Reihe von Systemen zur Verfügung, deren Übersetzungsleistung große Fortschritte gegenüber den älteren Systemen aufweisen. Derartige Systeme sind bekannt aus "machine translation systems", Jonathan Slocum, 1987, Cambridge University Press. Statt der rein lexikalen Übersetzung Wort für Wort wird bei diesen Systemen der Text satzweise übersetzt. Dabei wird in einem ersten Schritt geprüft, ob die Satzteile einen eindeutigen Sinn ergeben und erst in einem zweiten Schritt wird der ganze Satz sinngemäß in die gewünschte Sprache übersetzt.

Eine neuere Entwicklung verwendet innerhalb des Übersetzungsprozesses eine sprachneutrale, interne Zwischensprache (Interlingua). Derartige Systeme sind bekannt aus "Conceptual Information Processing", Roger C. Schank, 1975, North Holland Publishing Cpmpany, Amsterdam - Oxford und "Encyclopedia of artificial intelligence", Volume 1, Stuart C. Shapiro, 1987, John Wiley & Sons. Dabei wird nach satzweiser Überprüfung der Eindeutigkeit jeder Satz der Quellensprache in eine sprachneutrale, grammatikalisch und bedeutungsgemäß (semantisch) aufbereitete Zwischensprache übersetzt. Anschließend wird dann die neutrale Zwischensprache in die gewünschte Landessprache übersetzt. Dabei ist die Zwischensprache so strukturiert, daß aus ihr alle Weltsprachen generiert werden können.

Derartige Systeme könnten somit in einem internationalen Sprachenverbund verwendet werden. Problematisch daran wäre jedoch, daß bei einer Beteiligung von n Ländern am Internationalen Sprachenverbund je Land (n - 1) verschiedene Sprachübersetzungssysteme in Form von Übersetzungsprogrammen erforderlich wären. Bei einem weltweiten Sprachenverbund von beispielsweise 20 Ländern wären dies je Land 19 verschiedene Übersetzungsprogramme. Dies bedeutete, daß in einem Landesnetz das an einem Internationalen Sprachenverbund von beispielsweise 20 Ländern teilnähme, 19 verschiedene Übersetzungsprogramme an zentralen Stellen bereitgestellt werden müßten. Weiterhin müßte in jeder Übersetzungsrichtung die Zahl der gleichzeitig verfügbaren Übersetzungsprogramme nach dem Spitzenverkehr in der Hauptverkehrsstunde ausgelegt werden. Da dies ebenfalls für alle anderen Übersetzungsrichtungen gelten würde, wäre mit einer schlechten Ausnutzung der einzelnen Übersetzungsprogramme und einer relativ hohen Zahl der pro Übersetzungsrichtung erforderlichen parallel arbeitenden Übersetzungsprogramme zu rechnen. Weiterhin müßten durch das Hinzukommen eines Landes in den Internationalen Sprachenverbund in allen Ländern jeweils ein neues Ubersetzungsprogramm nachgerüstet werden. Das neu hinzukommende Land muß, wenn es beispielsweise das 21ste wäre, 20 neue Programme bereitstellen. Weiterhin müßte die Leistungsfähigkeit des Übersetzungsprogramms überprüft werden, indem die Qualität des Übersetzungsergebnisses einer Bewertung unterzogen wird. Derartige Bewertungen müssen dann von fremdsprachenfachkundigem Bedienpersonal durchgeführt werden, was sich in der Praxis als sehr aufwendig und umständlich erweist.

Aus der Druckschrift "MT Machine Translation Summit", Manuscripts and Program, 17. September 1987, Hakone, Kangawa-Ken, JP, Seiten 128 bis 132 ist ein Verfahren bekannt, mit dem eine in einer Quellensprache abgefaßte Information bei Sendebetrieb über ein Kommunikationsnetzwerk durch ein erstes, eine globale Standardsprache generierendes Ubersetzungsprogramm in einem ersten Übersetzungsvorgang in eine globale Standardsprache übersetzt und danach über das Kommunikationsnetz gesendet wird und bei Empfangsbetrieb die in der globalen Standardsprache abgefaßte Information in einem zweiten Übersetzungsvorgang durch ein zweites Übersetzungsprogramm in die Zielsprache übersetzt wird. Dieser Druckschrift ist aber insbesondere nicht entnehmbar, wie die Leistungsfähigkeit eines Übersetzungsprogrammes überprüft werden kann.

Weiterhin ist der Druckschrift "Terminology and Knowledge Engineering", Proceedings of the International Congress, 29. September 1987, Trier, DE, Seiten 369 bis 376 ebenfalls ein System entnehmbar, das sich auf Übersetzungsprogramme, die in verschiedenen Ländern angeordnet sind, bezieht. Wie die Leistungsfähigkeit dieser Übersetzungsprogramme überprüft werden kann, ist dieser Druckschrift ebenfalls nicht entnehmbar.

Schließlich ist der Druckschrift "IEICE Transactions on Communications", Band E75-B, Nr. 1, Januar 1992, Tokio, JP, Seiten 14 bis 19 ein Verfahren entnehmbar, mit dem Informationen in Form menschlicher Sprache unter Verwendung eines Sprachenerkennungssystems vor dem ersten Übersetzungsprogramm in eine globale Standardsprache übersetzt, über das internationale Kommunikationsnetz zum Zielland übertragen und dort von einem zweiten Übersetzungsprogramm von der globalen Standardsprache in die Zielsprache des jeweiligen Ziellandes übersetzt wird. Wie aber die Leistungsfähigkeit von Übersetzungsprogrammen überprüft werden kann, ist dieser Druckschrift ebenfalls nicht entnehmbar.

Der Erfindung liegt die Aufgabe zugrunde, einen Weg aufzuzeigen, die Leistungsfähigkeit von Übersetzungsprogrammen in effizienter Weise überprüft werden kann.

Die Erfindung wird ausgehend vom Oberbegriff des Patentanspruchs 1 durch dessen kennzeichnende Merkmale gelöst.

Vorteilhaft an der Erfindung ist, daß die in der Quellensprache abgefaßte Information im ersten Übersetzungsvorgang von dem ersten Übersetzungsprogramm in die globale Standardsprache übersetzt wird und die übersetzte Information im zweiten Übersetzungsvorgang von dem zweiten Übersetzungsprogramm für dasselbe Land wieder in die nun als Zielsprache definierte ursprüngliche Quellensprache rückübersetzt wird. Damit wird die Leistungsfähigkeit des ersten und zweiten Übersetzungsprogrammes überprüft.

Vorteilhafte Ausgestaltungen der Erfindung sind in den Unteransprüchen vorgesehen.

Im Anspruch 2 ist vorgesehen, daß die sprachneutrale globale Standardsprache aus einer Zwischensprache (interlingua), die ohnehin als Zwischenergebnis moderner Übersetzungsprogramme innerhalb eines Übersetzungsprozesses entsteht, abgeleitet wird; diese ist satzweise derart strukturiert, daß aus ihr alle Weltsprachen generiert werden können, womit der Vorteil verbunden ist, daß keine umfangreiche und zeitraubende Generierung der globalen Standardsprache durchgeführt werden muß.

Im Anspruch 3 ist vorgesehen, daß die in Quellensprache abgefaßte Information ein schriftlich abgefaßter Text sein kann. Damit ist der Vorteil verbunden, daß die Kommunikation schriftlich - wie etwa der textliche internationale Geschäftsverkehr - durchgeführt werden kann.

Im Anspruch 4 ist vorgesehen, daß einem in der Quellensprache schriftlich abgefaßten Text bestimmte Regeln, insbesondere hinsichtlich der Maximalanzahl der zu verwendenden Worte vorgegeben sind. Weiterhin ist vorgesehen, daß der in der Quellensprache schriftlich abgefaßte Text durch das erste Übersetzungsprogramm derart satzweise übersetzt wird, daß jedem Wort einschließlich dessen grammatikalischen Zusammenhangs (Syntax) und einschließlich der Wortbedeutung (Semantik) des in der Quellensprache

schriftlich abgefaßten Textes in der globalen Standardsprache ein bestimmter Code zugewiesen ist, was in der Praxis eine wortweise Codierung bedeutet. Vorteilhaft an dieser Vorgehensweise ist, daß insbesondere die Wortvielfalt auf ein bestimmtes Sachgebiet beschränkt wird, und damit eine Erhöhung der Dynamik des Übersetzungsprozesses im Sinne der Übersetzungsleistung pro Zeiteinheit erreicht wird.

Im Anspruch 5 ist vorgesehen, daß die ersten und zweiten Übersetzungsprogramme für jede Übersetzungsrichtung mindestens einmal verfügbar sind.

Im Anspruch 6 ist vorgesehen, daß jede Übersetzungsrichtung mehrere gleiche, parallel arbeitende erste Übersetzungsprogramme für die abgehende Richtung und zweite Übersetzungsprogramme für die ankommende Richtung je nach der zu erwartenden Verkehrsspitzenlast enthält. Dies bedeutet, daß die Anzahl der ersten und zweiten Übersetzungsprogramme in jeder Übersetzungsrichtung derart dimensioniert ist, daß auch zu Spitzenlastzeiten eine schnelle Übersetzung der Texte möglich ist.

Im Anspruch 7 ist vorgesehen, daß, falls ein Land zu dem internationalen Sprachverbund hinzutritt, dasselbe mit dem ersten und zweiten Übersetzungsprogramm ausgerüstet wird. Damit ist der Vorteil einer praktikablen Erweiterbarkeit des internationalen Sprachenverbundes verbunden.

Im Anspruch 8 ist vorgesehen, daß das erste und zweite Übersetzungsprogramm dezentral im Kommunikationsendgerät oder einer Nebenstellenanlage verwendbar ist. Damit ist der Vorteil einer Dynamisierung des Übersetzungsprozesses verbunden, da die Installierung in zentralen Knotenpunkten Blockierungen bei Spitzenlastzeiten bedeuten könnte.

Im Anspruch 9 ist vorgesehen, daß das erste und zweite Übertragungsprogramm dezentral in einem Kommunikationssystem im Sinne einer Ortsvermittlungsstelle verwendbar ist. Die damit verbundenen Vorteile entsprechen denen in Anspruch 8 aufgezeigten.

Im Anspruch 10 ist vorgesehen, daß ein in einer Quellensprache abgefaßter Text nach einem ersten Übersetzungsvorgang durch das erste Übersetzungsprogramm zu verschiedenen Teilnehmern in verschiedenen Ländern gesendet wird. Da der zu diesen Teilnehmern übertragene Text in der globalen Standardsprache abgefaßt ist, bedeutet eine solche Vorgehensweise einen weiteren Gewinn an Dynamik, da hier nur ein einmaliger Übersetzungsvorgang durchgeführt wird.

Im Anspruch 11 ist vorgesehen, daß anstelle eines schriftlich abgefaßten Textes menschliche Sprache mitübertragen wird; dies geschieht unter Verwendung eines Spracherkennungssystems. Damit ist der Vorteil einer flexiblen Handhabung der Übersetzung menschlicher Sprache verbunden.

Im Anspruch 12 ist vorgesehen, daß der Aufbau der globalen Standardsprache in Wortbedeutung bzw. grammatikalischen Zusammenhang in Anlehnung an eine "lebende" Sprache durchgeführt wird. Damit ist der Vorteil einer praktikablen Anwendung der globalen Standardsprache verbunden.

Die Erfindung wird anhand eines Ausführungsbeispiels näher erläutert. Es zeigen

FIG 1a      die Verwendung der Zwischensprache beim Stand der Technik,

FIG 1b      die Vorgehensweise des Übersetzungsvorganges beim Stand der Technik,

FIG 2      das erfindungsgemäße Verfahren,

FIG 3      die Vorgehensweise beim Überprüfen der Leistungsfähigkeit des ersten und zweiten Übersetzungsprogrammes,

Tabelle 1      den Dynamikvorteil des erfindungsgemäßen Verfahrens gegenüber dem Stande der Technik,

Tabelle 2      den Vorteil des erfindungsgemäßen Verfahrens gegenüber dem Stande der Technik.

Aufgrund der Bedeutung der Erfindung sei an dieser Stelle nochmals auf den Stand der Technik eingegangen:

In Fig. 1a ist der Übersetzungsvorgang aufgezeigt, wie er beim Stand der Technik durchgeführt wird. In diesem Falle wird von einem Übersetzungsprogramm eine Quellensprache A in eine sprachneutrale, grammatikalisch aufbereitete Zwischensprache ZS übersetzt. Anschließend wird dann die neutrale Zwischensprache ZS in die gewünschte Zielsprache B übersetzt. Die Zwischensprache ZS ist dabei so strukturiert, daß aus ihr alle Weltsprachen generiert werden können.

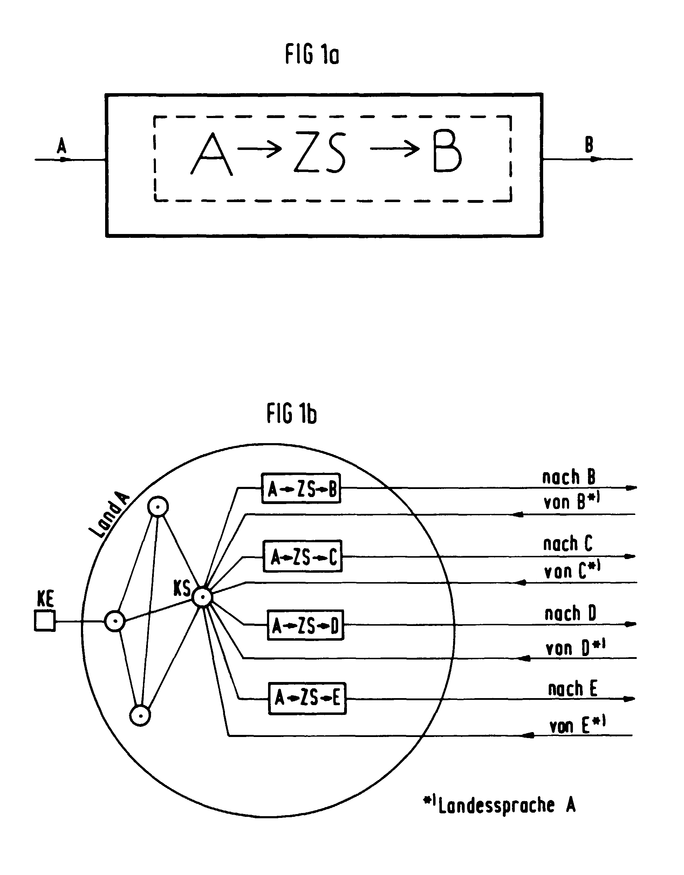

In FIG 1b ist aufgezeigt, wie unter Verwendung des schon erläuterten Übersetzungsprinzips ein aus mehreren Ländern bestehender internationaler Sprachenverbund durchgeführt werden könnte. Dabei sollen schriftlich abgefaßte Texte einer Quellensprache A in eine Zielsprachen B, C, D, E übersetzt werden. Zu diesem Zweck müßten in dem Ursprungsland für jede dieser Zielsprachen Übersetzungsprogramme vorhanden sein. In diesem Fall würde also durch ein erstes Übersetzungsprogramm von der Quellensprache A eine Zwischensprache ZS generiert und daraus die Zielsprache B gewonnen. Der in der Zielsprache B abgefaßte Text würde dann zu dem jeweiligen Zielland übertragen. In ähnlicher Weise würden die Zielsprachen C, D, E generiert und zu den jeweiligen Zielländern übertragen. Diese Verhältnisse sind auch in Tabelle 2, linke Spalte wiedergegeben.

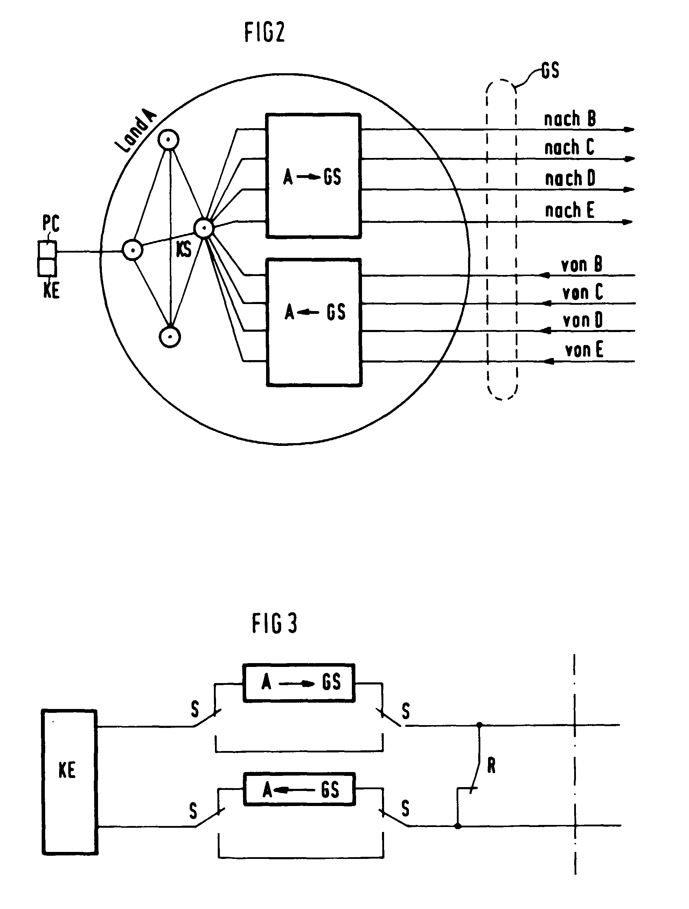

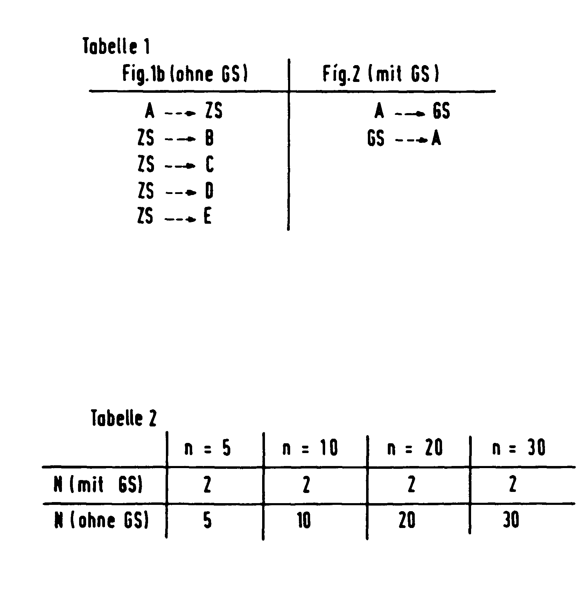

In FIG 2 ist das erfindungsgemäße Verfahren am Beispiel des Landes A aufgezeigt. Dabei wird ein erstes Übersetzungsprogramm TRANS1 in wenigstens einem internationalem Transitknoten eines internationalen Kommunikationsnetzes installiert. Seine Aufgabe besteht darin, aus der Quellensprache A des Ursprungslandes eine sprachneutrale globale Standardsprache GS zu generieren. Dies bedeutet, daß jeder vom Ursprungsland abgehende internationale Kommunikationsverkehr in der globalen Standardsprache GS abgewickelt wird. Die globale Standardsprache GS wird dann über das internationale Kommunikationsnetz den jeweiligen Zielländern B, C, D, E übermittelt, und dort mit dem dortigen zweiten Übersetzungsprogramm TRANS2 in die jeweilige Zielsprache übersetzt. Die Situation der Rückübersetzung von der globalen Standardsprache GS in die Zielsprache ist im unteren Teil der FIG 2 wiedergegeben. Der aus dem internationalen Kommunikationsnetz im Land A ankommende Verkehr wird im dortigen zweiten Übersetzungsprogramm TRANS2 von der globalen Standardsprache GS in die Zielsprache A des Landes A rückübersetzt.

Da die globale Standardsprache GS aus der Zwischensprache ZS generiert wird, ist eine hohe Dynamik beim Übersetzungsvorgang sichergestellt, da das Generieren der globalen Standardsprache GS auf der ja bereits vorhandenen Zwischensprache ZS basiert. Weiterhin muß dafür Sorge getragen werden, daß für jede Übersetzungsrichtung genügend Kapazität vorhanden ist. Je nach der zu erwarteten Spitzenlast werden daher in den Transitknoten für den abgehenden und den ankommenden Verkehr mehrere Übersetzungsprogramme TRANS1 und TRANS2 parallel installiert, um den in jenen Spitzenlastzeiten anfallenden Verkehr bewältigen zu können. Da die ersten und zweiten Übersetzungsprogramme TRANS1, TRANS2 für alle Übersetzungsrichtungen gemeinsam, d.h. im vollkommenen Bündel genutzt werden, ist der Nutzungsgrad je Übersetzungsprogramm höher. Hinzu kommt noch, daß die Verkehrsspitzen in den verschiedenen Übersetzungsrichtungen zu unterschiedlichen Zeiten auftreten. Insgesamt kann daher mit einer Einsparung von Übersetzungsprogrammen bis zu 30 % gerechnet werden.

Falls ein Land zu dem internationalen Sprachenverbund hinzutritt, wird lediglich ein erstes und zweites Übersetzungsprogramm TRANS1 und TRANS2 in diesem Land installiert.

Darüber hinaus kann das erste und zweite Übersetzungsprogramm TRANS1 und TRANS2 dezentral im nationalen Kommunikationsnetz installiert werden. Dies bedeutet, daß das erste und zweite Übersetzungsprogramm TRANS1 und TRANS2 beispielsweise in einem Mikrocomputer eines Kommunikationsendgerätes KE oder einer Nebenstellenanlage verwendet werden kann.

In FIG 3 ist eine Vorgehensweise aufgezeigt, wie unter Verwendung des ersten und zweiten Übersetzungprogrammes TRANS die Leistungsfähigkeit dieser Übersetzungsprogramme überprüft werden kann. Dabei wird von einem Kommunikationsendgerät KE ein Text unter Benutzung des Leistungsmerkmals "automatische Sprachenübersetzung" gesendet. Das erste Übersetzungsprogramm TRANS1 übernimmt den Text beispielsweise in der Landessprache A über einen Schalter S und führt ihn in die globale Standardsprache GS über. Anschließend erfolgt eine Überleitung des umgesetzten Textes über Schaltmittel R zu dem zweiten

Übersetzungsprogramm TRANS2. Dieses übernimmt den in der globalen Standardsprache GS codierten Text und führt ihn in den ursprünglichen, in der Quellensprache A abgefaßten Text über, womit eine einfache Überprüfung vorgenommen werden kann.

In Tabelle 1 wird nochmals der Vorteil des erfindungsgemäßen Verfahrens tabellarisch aufgezeigt. Darin ist die Anzahl N der unterschiedlichen Übersetzungsprogramme je Land mit und ohne Verwendung der globalen Standardsprache GS aufgezeigt. Beispielsweise wird für n = 5, also für einen internationalen Sprachverbund zwischen den Ländern A, B, C, D und E die Anzahl der unterschiedlichen Übersetzungsprogramme im Lande A gemäß FIG 1b ohne globale Standardsprache GS und mit globaler Standardsprache GS gemäß FIG 2 dargestellt. Im zuletzt genannten Fall ergibt ein internationaler Sprachenverbund mit globaler Standardsprache GS eine Gesamtanzahl von Übersetzungsprogrammen N = 2 (TRANS1 und TRANS2). Dagegen steht ein internationaler Sprachenverbund ohne globale Standardsprache GS mit einer Gesamtanzahl von unterschiedlichen Übersetzungsprogrammen N = 5. Je größer der internationale Sprachenverbund, umso bedeutender wiegt auch der Vorteil der Einführung einer globalen Standardsprache GS, wie das Beispiel eines internationalen Sprachenverbundes mit n = 30 Ländern in Tabelle 2 zeigt.

Hierbei sind, falls keine globale Standardsprache GS vorhanden ist, 30 Übersetzungsprogramme installiert, während, falls eine globale Standardsprache vorhanden ist, nur zwei Übersetzungsprogramme - i.e. das erste und zweite Ubersetzungsprogramm TRANS1 und TRANS2 - installiert werden.

Tabelle 2 zeigt, daß bei einem internationalen Sprachverbund mit 5 beteiligten Ländern die Zahl der erforderlichen unterschiedlichen Übersetzungsprogramme je Land durch die Verwendung einer globalen Standardsprache GS auf $\frac{2}{5}$ (= 40 %) sinkt.

Bei 30 beteiligten Ländern würde sich eine Reduktion auf $\frac{2}{30}$ (= 7 %) ergeben.

Abschließend sei noch darauf hingewiesen, daß die aus der Zwischensprache ZS abgeleitete globale Standardsprache GS beispielsweise auch wortweise codiert werden kann. Dabei kann zur Erleichterung der Einführung eines internationalen Sprachenverbundes die Wortvielfalt - z.B. auf den textlichen Geschäftsverkehr - beschränkt werden. Je Wort werden dann beispielsweise vier Oktett übertragen. Davon werden dann 12 Bit für die Codierung der beipielsweise 4000 zugelassenen Worte verwendet, mit 10 Bit wird die grammatikalische Einordnung des jeweiligen Wortes im Satz angegeben, und mit 9 Bit werden dann andere Eigenschaften des jeweiligen Wortes angegeben; so zum Beispiel ein Hinweis, der die Mehrdeutung eines Wortes eingrenzt oder Hinweis, daß die ersten zwölf Bit nicht die Codierung eines Wortes darstellen, sondern zwei Buchstaben eines Eigennamens, der nicht übersetzt wird oder zwei Ziffern einer Zahl. Mit dem verbleibenden Bit kann noch eine Prüfinformation z.B. in Form eines Parity-Checks übertragen werden.

Weiterhin sei noch darauf hingewiesen, daß anstelle eines schriftlich abgefaßten Textes menschliche Sprache unter Verwendung eines Spracherkennungssystems von dem ersten und zweiten Übersetzungsprogramm TRANS1 und TRANS2 übersetzt werden kann (Text-Sprache Übertragung). Weiterhin kann die globale Standardsprache in Wortbedeutung bzw. grammatikalischem Zusammenhang in Anlehnung an eine "lebende" Sprache konzipiert werden. Dies kann beispielsweise Englisch oder Esperanto sein.

## Patentansprüche

1. Verfahren zur Realisierung eines internationalen Sprachenverbundes in einem internationalen Kommunikationsnetz, das mehrere Länder miteinander verbindet und in welchem eine Sprachübersetzung einer Quellensprache durchgeführt wird, wobei die in einer Quellensprache abgefaßte Information bei abgehendem Auslandsverkehr durch ein erstes, eine globale Standardsprache (GS) generierendes Übersetzungsprogramm (TRANS 1) in einem ersten Übersetzungsvorgang in eine globale Standardsprache (GS) übersetzt und danach über das internationale Kommunikationsnetz zum Zielland gesendet wird, und dort bei ankommendem Auslandsverkehr die in der globalen Standardsprache (GS) abgefaßte Information in einem zweiten Übersetzungsvorgang durch ein zweites Übersetzungsprogramm (TRANS2) in die Zielsprache des jeweiligen Ziellandes übersetzt wird, **dadurch gekennzeichnet,**
   daß die Leistungsfähigkeit des ersten und zweiten Übersetzungsprogrammes (TRANS1, TRANS2) für dasselbe Land überprüft wird, indem die in der Quellensprache abgefaßte Information im ersten Übersetzungsvorgang von dem ersten Ubersetzungsprogramm ( TRANS 1) in die globale Standardsprache (GS) übersetzt wird und die übersetzte Information im zweiten Übersetzungsvorgang von dem zweiten Übersetzungsprogramm (TRANS2) wieder in die nun als Zielsprache definierte ursprüngliche Quellensprache rückübersetzt wird.

2. Verfahren nach Anspruch 1,
   **dadurch gekennzeichnet,**
   daß die globale Standardsprache (GS) aus einer sprachneutralen Zwischensprache (ZS) abgeleitet wird, die beim Ubersetzen der Quellensprache in die Zielsprache als Zwischenergebnis generiert wird.

3. Verfahren nach Anspruch 1 oder 2, **dadurch gekennzeichnet,** daß die Information ein schriftlich abgefaßter Text ist.

**4.** Verfahren nach Anspruch 1, 2 oder 3, **dadurch gekennzeichnet,**
daß für eine, in der Quellensprache abgefaßte Information bestimmte Regeln, insbesondere hinsichtlich der Maximalanzahl der zu verwendenden Worte, vorgegeben sind, und
daß die in der Quellensprache abgefaßte Information in abgehender Richtung durch das erste Übersetzungsprogramm (TRANS1) derart übersetzt wird, daß jedes Wort der Information einschließlich des grammatikalischen Zusammenhangs des Wortes und einschließlich der Wortbedeutung in der globalen Standardsprache (GS) mit einem festgelegten Code codiert wird.

**5.** Verfahren nach einem der vorhergehenden Ansprüche, **dadurch gekennzeichnet,**
daß das erste und zweite Übersetzungsprogramm (TRANS1 und TRANS2) für jede Übersetzungsrichtung mindestens einmal vorhanden sind.

**6.** Verfahren nach Anspruch 5, **dadurch gekennzeichnet**, daß für jede Übersetzungsrichtung mehrere gleiche, parallel arbeitende erste und zweite Übersetzungsprogramme (TRANS1 und TRANS2) je nach der zu erwartenden Verkehrsspitzenlast vorgesehen sind.

**7.** Verfahren nach einem der vorhergehenden Ansprüche, **dadurch gekennzeichnet,**
daß, falls ein Land zu dem internationalen Sprachenverbund hinzutritt, dasselbe mit dem ersten und zweiten Übersetzungsprogramm (TRANS1 und TRANS2) ausgerüstet wird.

**8.** Verfahren nach einem der vorhergehenden Ansprüche, **dadurch gekennzeichnet,**
daß das erste und zweite Übersetzungsprogramm (TRANS1 und TRANS2) dezentral in einem Mikrocomputer (PC) eines Kommunikationsendgerätes (KE) bzw. einer Nebenstellenanlage verwendbar ist.

**9.** Verfahren nach einem der vorhergehenden Ansprüche,
**dadurch gekennzeichnet,** daß das erste und zweite Übersetzungsprogramm (TRANS1 und TRANS2) dezentral in einem Kommunikationssystem (KS) im Sinne einer Ortsvermittlungsstelle bzw. eines Transitamtes verwendbar ist.

**10.** Verfahren nach einem der vorhergehenden Ansprüche, **dadurch gekennzeichnet,**
daß eine in einer Quellensprache abgefaßte Information nach dem ersten Übersetzungsvorgang durch das erste Übersetzungsprogramm (TRANS1) in Form der globalen Standardsprache (GS) an verschiedene Teilnehmer in verschiedenen Ländern gesendet wird.

**11.** Verfahren nach einem der vorhergehenden Ansprüche, **dadurch gekennzeichnet,**
daß als Information menschliche Sprache unter Verwendung eines Spracherkennungssystems von dem ersten Übersetzungsprogramm (TRANS1) in die globale Standardsprache (GS) übersetzt, über das internationale Kommunikationsnetz zum Zielland übertragen und dort vom zweiten Übersetzungsprogramm (TRANS2) von der globalen Standardsprache (GS) in die Zielsprache des jeweiligen Ziellandes übersetzt wird.

**12.** Verfahren nach einem der vorhergehenden Ansprüche, **dadurch gekennzeichnet,** daß
der Aufbau der globalen Standardsprache (GS) in Wortbedeutung bzw. grammatikalischem Zusammenhang in Anlehnung an eine lebende Sprache durchgeführt wird.

## Claims

**1.** Method for providing an international language union in an international communications network which connects a number of countries to one another and in which language translation from a source language is carried out, in which case the information which exists in a source language is translated, for outgoing foreign traffic, into a global standard language (GS) in a first translation process by means of a first translation program (TRANS1) which generates a global standard language (GS) and, after this, is transmitted via the international communications network to the destination country, where, for arriving foreign traffic, the information which exists in the global standard language (GS) is translated into the target language of the respective destination country, in a second translation process by means of a second translation program (TRANS2),
characterized
in that the performance of the first and second translation programs (TRANS1, TRANS2) is checked for the same country in that the information which exists in the source language is translated in the first translation process by the first translation program (TRANS1) into the global standard language (GS), and the translated information is translated back again into the original source language, which is now defined as the target language, in the second translation process by the second translation program (TRANS2).

**2.** Method according to Claim 1,

characterized
in that the global standard language (GS) is derived from a linguistically neutral intermediate language (ZS) which is generated as an intermediate result during translation of the source language into the target language.

3. Method according to Claim 1 or 2, characterized in that the information is a text in written form.

4. Method according to Claim 1, 2 or 3, characterized

in that specific rules, particularly with regard to the maximum number of words to be used, are specified for information which exists in the source language, and
in that the information which exists in the source language is translated in the outgoing direction by means of the first translation program (TRANS1) in such a manner that each word of information, including the grammatical context of the word and including the word meaning, is coded in the global standard language (GS) using a defined code.

5. Method according to one of the preceding claims, characterized
in that the first and second translation programs (TRANS1 and TRANS2) are provided at least once for each translation direction.

6. Method according to Claim 5, characterized in that a plurality of identical first and second translation programs (TRANS1 and TRANS2), which work in parallel, are provided, depending on the peak traffic flow to be expected, for each translation direction.

7. Method according to one of the preceding claims, characterized
in that, when a country joins the international language union, this country is equipped with the first and second translation programs (TRANS1 and TRANS2).

8. Method according to one of the preceding claims, characterized
in that the first and second translation programs (TRANS1 and TRANS2) can be used in a decentralized manner in a microcomputer (PC) of a communication terminal (KE) and/or of a private branch exchange.

9. Method according to one of the preceding claims, characterized in that the first and second translation programs (TRANS1 and TRANS2) can be used in a decentralized manner in a communications system (KS) in the sense of a local switching centre or of a transit office.

10. Method according to one of the preceding claims, characterized
in that information which exists in a source language is transmitted, after the first translation process by means of the first translation program (TRANS1), in the form of the global standard language (GS), to different subscribers in different countries.

11. Method according to one of the preceding claims, characterized
in that, as information, a human language is translated, using a language identification system, by the first translation program (TRANS1) into the global standard language (GS), is transmitted via the international communications network to the destination country, where it is translated by the second translation program (TRANS2) from the global standard language (GS) into the target language of the respective destination country.

12. Method according to one of the preceding claims, characterized in that the meanings of the words and the grammatical contexts in the design of the global standard language (GS) are based on a living language.

**Revendications**

1. Procédé de réalisation d'une liaison internationale entre langues dans un réseau de communication international qui relie plusieurs pays entre eux et dans lequel on effectue une traduction d'une langue d'origine, dans lequel l'information rédigée dans une langue d'origine pour un trafic international partant est traduite lors d'une première opération de traduction par un premier programme de traduction (TRANS1), produisant une langue standard globale (GS), dans une langue standard globale (GS) puis est émise par l'intermédiaire du réseau de communication international vers le pays de destination où, pour le trafic international arrivant, l'information rédigée dans la langue standard globale (GS) est traduite lors d'une deuxième opération de traduction par un deuxième programme de traduction (TRANS2) dans la langue de destination du pays de destination respectif, caractérisé par le fait que l'on contrôle l'efficacité du premier et du deuxième programme de traduction (TRANS1, TRANS2) pour un seul et même pays en traduisant l'information rédigée dans la langue d'origine lors d'une première opération de traduction au moyen du premier programme de traduction (TRANS1) dans la langue standard globale (GS) et en retraduisant l'information traduite lors d'une deuxième opération de traduction au moyen du deuxième programme de traduction (TRANS2) dans la langue d'origine initiale définie maintenant comme langue de destination.

2. Procédé selon la revendication 1, caractérisé par le fait que l'on déduit la langue standard globale (GS) d'une langue intermédiaire (ZS) qui est neutre du point de vue des langues et qui est produite comme résultat intermédiaire lors de la traduction de la langue d'origine dans la langue de destination.

3. Procédé selon la revendication 1 ou 2, caractérisé par le fait que l'information est un texte rédigé.

4. Procédé selon la revendication 1, 2 ou 3. caractérisé par le fait que pour une information rédigée dans la langue d'origine, on prescrit certaines règles concernant notamment le nombre maximal des mots à utiliser, et l'information rédigée dans la langue d'origine est traduite en direction partante par le premier programme de traduction (TRANS1) de telle sorte que chaque mot de l'information est codé, en fonction de son contexte grammatical et de sa signification, dans la langue standard globale (GS) avec un code fixé.

5. Procédé selon l'une des revendications précédentes, caractérisé par le fait que le premier et le deuxième programme de traduction (TRANS1 et TRANS2) sont présents au moins une fois pour chaque direction de traduction.

6. Procédé selon la revendication 5, caractérisé par le fait que, pour chaque direction de traduction, plusieurs premiers programmes de traduction identiques et travaillant en parallèle (TRANS1) et plusieurs deuxièmes programmes de traduction identiques et travaillant en parallèle (TRANS2) sont prévus en fonction de la charge de pointe de trafic escomptée.

7. Procédé selon l'une des revendications précédentes, caractérisé par le fait que, si un pays entre dans la liaison internationale entre langues, on le munit du premier et du deuxième programme de traduction (TRANS1 et TRANS2).

8. Procédé selon l'une des revendications précédentes, caractérisé par le fait que le premier et le deuxième programme de traduction (TRANS1 et TRANS2) peuvent être utilisés de manière décentralisée dans un micro-ordinateur (PC) d'un terminal de communication (KE) ou d'un central privé.

9. Procédé selon l'une des revendications précédentes, caractérisé par le fait que le premier et le deuxième programme de traduction (TRANS1 et TRANS2) peuvent être utilisés de manière décentralisée dans un système de communication (KS) comme un central local ou un central de transit.

10. Procédé selon l'une des revendications précédentes, caractérisé par le fait que l'on émet une information rédigée dans une langue d'origine après la première opération de traduction par le premier programme de traduction (TRANS1) sous la forme de la langue standard globale (GS) à différents abonnés dans différents pays.

11. Procédé selon l'une des revendications précédentes, caractérisé par le fait qu'on traduit comme information une parole humaine, en utilisant un système de reconnaissance de la parole, au moyen du premier programme de traduction (TRANS1) dans la langue standard globale (GS), on transmet l'information par l'intermédiaire du réseau de communication international au pays de destination et on traduit là l'information au moyen du deuxième programme de traduction (TRANS2) de la langue standard globale (GS) à la langue de destination du pays de destination respectif.

12. Procédé selon l'une des revendications précédentes, caractérisé par le fait que l'on détermine la structure de la langue standard globale (GS) quant à la signification des mots et au contexte grammatical en s'appuyant sur une langue vivante.

## FIG 1a

## FIG 1b

*)Landessprache A

# FIG2

# FIG 3

**Tabelle 1**

| Fig.1b (ohne GS) | Fig.2 (mit GS) |
|---|---|
| A --→ ZS | A --→ GS |
| ZS --→ B | GS --→ A |
| ZS --→ C | |
| ZS --→ D | |
| ZS --→ E | |

**Tabelle 2**

| | n = 5 | n = 10 | n = 20 | n = 30 |
|---|---|---|---|---|
| N (mit GS) | 2 | 2 | 2 | 2 |
| N (ohne GS) | 5 | 10 | 20 | 30 |